# EUROPEAN PATENT APPLICATION

(11) **EP 4 579 983 A1**
(43) Date of publication of application: **02.07.2025**
(21) Application number: 24851097.6
(22) Date of filing: 08.08.2024
(51) Int. Cl.: H02J 3/36, H02J 3/38, H02M 7/06, H02M 7/483

(54) **SELF-STARTING OFFSHORE WIND DIRECT-CURRENT POWER TRANSMISSION SYSTEM, AND STARTING CONTROL METHOD AND APPARATUS THEREFOR**

(30) Priority: 10.08.2023 CN 202311002630
(71) Applicant: China Three Gorges Corporation Industrial Development (Beijing) Co., Ltd., Beijing 101199 (CN); China Three Gorges Corporation, Wuhan, Hubei 430010 (CN)
(72) Inventor: WANG, Yifan, Beijing 101199 (CN); TANG, Bojin, Beijing 101199 (CN); GOU, Lifeng, Beijing 101199 (CN); CHANG, Yong, Beijing 101199 (CN); WU, Qiren, Beijing 101199 (CN); ZHOU, Xingda, Beijing 101199 (CN); LV, Pengyuan, Beijing 101199 (CN); JIA, Na, Beijing 101199 (CN); WANG, Jinshi, Beijing 101199 (CN); GUO, Mingzhu, Beijing 101199 (CN); SHAN, Xiaohui, Beijing 101199 (CN); WU, Jinbo, Beijing 101199 (CN); YANG, Benjun, Beijing 101199 (CN); CHEN, Meifu, Beijing 101199 (CN); QI, Shaobing, Beijing 101199 (CN); LIU, Shujun, Beijing 101199 (CN); ZHOU, Bin, Beijing 101199 (CN); LI, Xiaotong, Beijing 101199 (CN)
(74) Representative: Bryn Aarflot AS
(86) International application number: PCT/CN2024/110683
(87) International publication number: WO 2025/031452

(57) **Abstract**

The present application relates to the technical field of electric power engineering, and provides a self-startable offshore wind power HVDC transmission system and a starting control method and apparatus. The system includes an onshore power grid, an onshore converter station, an offshore converter station, and an offshore wind farm. The onshore power grid is connected to the onshore converter station. The onshore converter station is connected to the offshore converter station. The offshore converter station includes a first diode valve, an offshore half-bridge flexible direct-current converter valve, a second diode valve, a diesel generator-converter group, and an offshore alternating-current bus. The first diode valve, the offshore half-bridge flexible direct-current converter valve, and the second diode valve are connected in series on a direct-current side. The first diode valve, the offshore half-bridge flexible direct-current converter valve, the second diode valve, and the diesel generator-converter group are respectively connected to the offshore alternating-current bus. The offshore alternating-current bus is connected to the offshore wind farm. Through the present application, the construction costs of the offshore wind power HVDC transmission system are reduced, and meanwhile, the self-starting of the offshore converter station and the offshore wind farm is implemented by adopting the diesel generator-converter group.

## Description

This application claims priority to Chinese patent application No. 202311002630.8, entitled "SELF-STARTABLE OFFSHORE WIND POWER DIRECT-CURRENT TRANSMISSION SYSTEM AND STARTING CONTROL METHOD AND APPARATUS", filed with the China National Intellectual Property Administration on Thursday, August 10, 2023, the disclosure of which is hereby incorporated by reference in its entirety.

### TECHNICAL FIELD

The present application relates to the technical field of electric power engineering, and in particular, to a self-startable offshore wind power HVDC (high voltage direct current) transmission system and a starting control method and apparatus.

### BACKGROUND

At present, commissioned pelagic wind power is usually delivered through flexible direct current. However, an offshore flexible direct-current converter platform has both an excessively large size and an excessively heavy weight and requires high construction costs. To implement a compact and lightweight offshore converter platform and reduce the costs of an offshore converter station, existing technologies mainly have two routes. In one route, a pure diode is used in an offshore converter valve. In the other route, a diode and an auxiliary flexible direct-current converter valve (modular multilevel converter, MMC) form an offshore mixing valve.

In comparison, the costs, size, and weight of a mixing valve are less than those of a pure flexible direct-current converter valve, and are greater than those of a pure-diode valve depending on a ratio of auxiliary MMCs. In addition, compared with the pure-diode valve, the mixing valve can greatly reduce the investment and occupied space of a passive filter, and also in terms of performance, due to the auxiliary MMCs, the mixing valve has advantages such as starting an offshore wind farm, active filtering, providing certain passive compensation, and resonance inhibition measures.

In the existing technologies, a solution in which an auxiliary MMC and a diode valve are connected in parallel on a direct-current side is used, and a direct-current voltage of the auxiliary MMC is the same as a system direct-current voltage. As a result, the number of auxiliary MMC submodules is huge, and the size and costs of the current converter valve cannot be effectively reduced. Alternatively, a solution in which an auxiliary full-bridge MMC and a diode valve are connected in series on a direct-current side is used, and the size and weight of the full-bridge MMC can be effectively reduced compared with the parallel-connection solution. However, to implement backfeed of a starting power supply from an onshore station to an offshore station, a thyristor converter valve (line commutated converter, LCC) is used in the onshore station. The LCC has a risk of a phase-change failure, resulting in reduced power supply reliability.

### SUMMARY OF THE INVENTION

To reduce the construction costs of an offshore wind power HVDC transmission system, implement self-starting of an offshore converter station and an offshore wind farm, and ensure power supply reliability, this application provides a self-startable offshore wind power HVDC transmission system and a starting control method and apparatus.

In a first aspect, the present application provides a self-startable offshore wind power HVDC transmission system. The system includes an onshore power grid, an onshore converter station, an offshore converter station, and an offshore wind farm;
the onshore power grid is connected to the onshore converter station; the onshore converter station is connected to the offshore converter station, and the offshore converter station includes a first diode valve, an offshore half-bridge flexible direct-current converter valve, a second diode valve, a diesel generator-converter group, and an offshore alternating-current bus; the first diode valve, the offshore half-bridge flexible direct-current converter valve, and the second diode valve are connected in series on a direct-current side; the first diode valve, the offshore half-bridge flexible direct-current converter valve, the second diode valve, and the diesel generator-converter group are respectively connected to the offshore alternating-current bus; and the offshore alternating-current bus is connected to the offshore wind farm.

Through the foregoing system, in the offshore converter station, the offshore half-bridge flexible direct-current converter valve is connected in series to the first diode valve and the second diode valve on the direct-current side. The submodule costs of the offshore half-bridge flexible direct-current converter valve are lower than the costs of full-bridge submodules. In addition, a low-cost diesel generator-converter group is used as a grid-forming power supply in the offshore converter station to provide a starting power supply to an offshore converter platform and a wind farm. The system implements a self-starting function when onshore backfeed of a starting power supply fails. In addition, the diesel generator-converter group does not have a risk of a phase-change failure, so that power supply reliability is ensured.

In an optional implementation, the onshore converter station includes an onshore flexible direct-current converter valve, and the onshore flexible direct-current converter valve includes a three-phase bridge arm structure, and each bridge arm of the three-phase bridge arm structure includes a plurality of half-bridge submodules connected in series.

Through the foregoing implementation, the use of the half-bridge submodules in the onshore converter station can further reduce the construction costs of the offshore wind power HVDC transmission system, and in addition, compared with the use of an LLC converter valve, the power supply reliability of the onshore converter station is improved.

In an optional implementation, the onshore converter station further includes an onshore flexible direct-current interface transformer, and the onshore flexible direct-current converter valve is connected to the onshore power grid through a second circuit breaker, the onshore flexible direct-current interface transformer, and a first circuit breaker in sequence.

In an optional implementation, the diesel generator-converter group includes a diesel generator and a converter, and the offshore converter station further includes a voltage-transformer; and
the diesel generator is connected to the offshore alternating-current bus through the converter, a third circuit breaker, the voltage-transformer, and a fourth circuit breaker in sequence.

In an optional implementation, the offshore converter station further includes a first rectifier transformer, an offshore flexible direct-current interface transformer, and a second rectifier transformer;
the first diode valve is connected to the offshore alternating-current bus through the first rectifier transformer and a fifth circuit breaker in sequence;
the offshore half-bridge flexible direct-current converter valve is connected to the offshore alternating-current bus through a sixth circuit breaker, the offshore flexible direct-current interface transformer, and a seventh circuit breaker in sequence; and
the second diode valve is connected to the offshore alternating-current bus through the second rectifier transformer and an eighth circuit breaker in sequence.

In a second aspect, the present application further provides a starting control method of a self-startable offshore wind power HVDC transmission system, used by the self-startable offshore wind power HVDC transmission system in the first aspect. The method includes:
charging the onshore converter station by the onshore power grid until the charging of the onshore converter station is completed;
controlling the offshore half-bridge flexible direct-current converter valve and the diesel generator-converter group in the offshore converter station to jointly support an alternating-current bus voltage of the offshore alternating-current bus to start the offshore wind farm; and
turning on the first diode valve and the second diode valve in the offshore converter station to complete the starting of the self-startable offshore wind power HVDC transmission system.

Through the foregoing method, the offshore wind power HVDC transmission system can implement a self-starting function by using a low-cost diesel generator-converter group as a grid-forming power supply when onshore backfeed of a starting power supply fails.

In an optional implementation, the onshore converter station includes an onshore flexible direct-current converter valve and an onshore flexible direct-current interface transformer, and the onshore flexible direct-current converter valve is connected to the onshore power grid through a second circuit breaker, the onshore flexible direct-current interface transformer, and a first circuit breaker in sequence; and
the step of charging the onshore converter station by the onshore power grid until the charging of the onshore converter station is completed includes:
closing the first circuit breaker and the second circuit breaker, charging the onshore flexible direct-current converter valve by the onshore power grid until the charging of the onshore flexible direct-current converter valve is completed, and then unlocking the onshore flexible direct-current converter valve.

In an optional implementation, the step of controlling the offshore half-bridge flexible direct-current converter valve and the diesel generator-converter group in the offshore converter station to jointly support an alternating-current bus voltage of the offshore alternating-current bus to start the offshore wind farm includes:
controlling the diesel generator-converter group to establish the alternating-current bus voltage to enable the offshore half-bridge flexible direct-current converter valve to complete charging, and then unlocking the offshore half-bridge flexible direct-current converter valve; and
controlling the offshore half-bridge flexible direct-current converter valve and the diesel generator-converter group to jointly support the alternating-current bus voltage to start the offshore wind farm.

In an optional implementation, the diesel generator-converter group includes a diesel generator and a converter, and the offshore converter station further includes a voltage-transformer, a first rectifier transformer, an offshore flexible direct-current interface transformer, and a second rectifier transformer; the diesel generator is connected to the offshore alternating-current bus through the converter, a third circuit breaker, the voltage-transformer, and a fourth circuit breaker in sequence; the first diode valve is connected to the offshore alternating-current bus through the first rectifier transformer and a fifth circuit breaker in sequence; the offshore half-bridge flexible direct-current converter valve is connected to the offshore alternating-current bus through a sixth circuit breaker, the offshore flexible direct-current interface transformer, and a seventh circuit breaker in sequence; and the second diode valve is connected to the offshore alternating-current bus through the second rectifier transformer and an eighth circuit breaker in sequence; and
the step of controlling the diesel generator-converter group to establish the alternating-current bus voltage to enable the offshore half-bridge flexible direct-current converter valve to complete charging, and then unlocking the offshore half-bridge flexible direct-current converter valve includes:
closing the third circuit breaker, the fourth circuit breaker, the fifth circuit breaker, the sixth circuit breaker, the seventh circuit breaker, and the eighth circuit breaker, controlling the diesel generator-converter group to establish the alternating-current bus voltage in a manner of stepping up from zero voltage by means of alternating-current voltage amplitude and frequency control, starting to charge the offshore half-bridge flexible direct-current converter valve and feeding electricity into the first rectifier transformer, the offshore flexible direct-current interface transformer, and the second rectifier transformer during a process of stepping up from zero voltage, continuing to charge the offshore half-bridge flexible direct-current converter valve after the diesel generator-converter group establishes the alternating-current bus voltage until the charging of the offshore half-bridge flexible direct-current converter valve is completed, and then unlocking the offshore half-bridge flexible direct-current converter valve.

Through the foregoing implementation, the diesel generator-converter group is controlled to establish the alternating-current bus voltage in the manner of stepping up from zero voltage by means of alternating-current voltage amplitude and frequency control to stably charge the offshore half-bridge flexible direct-current converter valve, to avoid a charging overcurrent, excite the first rectifier transformer, the offshore flexible direct-current interface transformer, and the second rectifier transformer, reduce a current impact when the diode valves are put into operation, and avoid the addition of an extra charging resistance.

In an optional implementation, the step of controlling the offshore half-bridge flexible direct-current converter valve and the diesel generator-converter group to jointly support the alternating-current bus voltage to start the offshore wind farm includes:
controlling the offshore half-bridge flexible direct-current converter valve in a manner of alternating-current voltage amplitude and frequency control to jointly support the alternating-current bus voltage together with the diesel generator-converter group to start a preset quantity of wind turbines in the offshore wind farm; and
after the preset quantity of wind turbines in the offshore wind farm have been started so that power is transmitted to the offshore converter station therefrom, switching the diesel generator to a control manner with a fixed active power and a fixed reactive power.

In an optional implementation, the step of turning on the first diode valve and the second diode valve in the offshore converter station to complete the starting of the self-startable offshore wind power HVDC transmission system includes:
controlling the offshore half-bridge flexible direct-current converter valve to increase the alternating-current bus voltage to turn on the first diode valve and the second diode valve; and
controlling the diesel generator to exit operation, and starting other wind turbines in the offshore wind farm to complete the starting of the system.

In an optional implementation, the step of controlling the diesel generator to exit operation includes:
reducing an active power and a reactive power of the diesel generator until the active power and the reactive power of the diesel generator are both 0, and then opening the third circuit breaker and the fourth circuit breaker.

In a third aspect, the present application further provides a starting control apparatus of a self-startable offshore wind power HVDC transmission system, used by the self-startable offshore wind power HVDC transmission system in the first aspect. The apparatus includes:
a first control module, configured to charge the onshore converter station by the onshore power grid until the charging of the onshore converter station is completed;
a second control module, configured to control the offshore half-bridge flexible direct-current converter valve and the diesel generator-converter group in the offshore converter station to jointly support an alternating-current bus voltage of the offshore alternating-current bus to start the offshore wind farm; and
a turn-on module, configured to turn on the first diode valve and the second diode valve in the offshore converter station to complete the starting of the self-startable offshore wind power HVDC transmission system.

In a fourth aspect, the present application further provides a computer device, including: a memory and a processor. The memory and the processor are in communicational connection with each other, the memory has computer instructions stored therein, and the processor is configured to execute the computer instructions to perform the steps of the starting control method of a self-startable offshore wind power HVDC transmission system in the second aspect or any implementation of the second aspect.

In a fifth aspect, the present application further provides a computer-readable storage medium, having a computer program stored therein, where the computer program, when executed by a processor, causes the processor to implement the steps of the starting control method of a self-startable offshore wind power HVDC transmission system in the second aspect or any implementation of the second aspect.

### BRIEF DESCRIPTION OF THE DRAWINGS

To describe the technical solutions in specific embodiments of the present application or the prior art more clearly, the following briefly introduces the accompanying drawings required for describing the specific embodiments or the prior art. Apparently, the accompanying drawings in the following description show some embodiments of the present application, and a person of ordinary skill in the art may still derive other drawings from these accompanying drawings without creative efforts.
FIG. 1 is a circuit diagram of a self-startable offshore wind power HVDC transmission system according to an exemplary embodiment;
FIG. 2 is a flowchart of a starting control method of a self-startable offshore wind power HVDC transmission system according to an exemplary embodiment;
FIG. 3 is a schematic structural diagram of a starting control apparatus of a self-startable offshore wind power HVDC transmission system according to an exemplary embodiment; and
FIG. 4 is a schematic diagram of a hardware structure of a computer device according to an exemplary embodiment.

### DETAILED DESCRIPTION

The following clearly and completely describes the technical solutions in the present application with reference to the accompanying drawings. Apparently, the embodiments described below are some embodiments of the present application rather than all the embodiments. All other embodiments obtained by persons of ordinary skill in the art based on embodiments of the present application without creative efforts shall fall within the protection scope of the present application.

To reduce the construction costs of an offshore wind power HVDC transmission system, implement self-starting of an offshore converter station and an offshore wind farm, and ensure power supply reliability, this application provides a self-startable offshore wind power HVDC transmission system and a starting control method and apparatus.

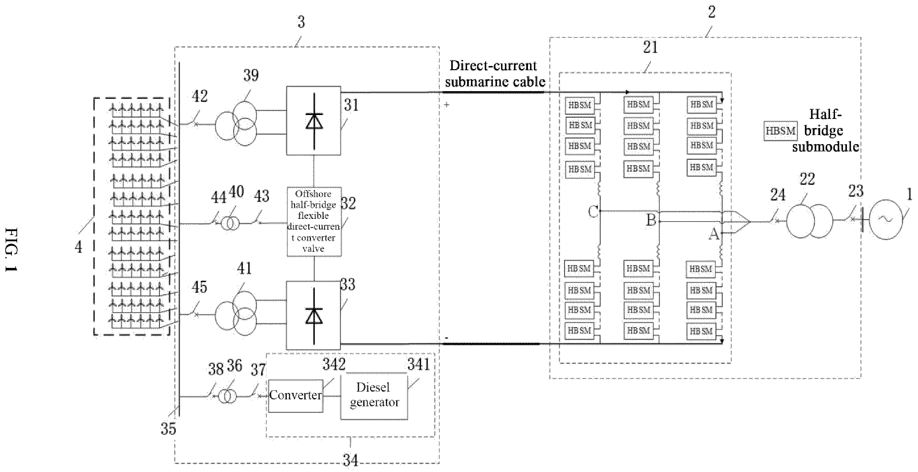

FIG. 1 is a circuit diagram of a self-startable offshore wind power HVDC transmission system according to an exemplary embodiment. The system includes an onshore power grid 1, an onshore converter station 2, an offshore converter station 3, and an offshore wind farm 4.

The onshore power grid 1 is connected to the onshore converter station 2.

The onshore converter station 2 is connected to the offshore converter station 3. For example, the onshore converter station 2 is connected to the offshore converter station 3 through a direct-current submarine cable.

The offshore converter station 3 includes a first diode valve 31, an offshore half-bridge flexible direct-current converter valve 32, a second diode valve 33, a diesel generator-converter group 34, and an offshore alternating-current bus 35. The first diode valve 31, the offshore half-bridge flexible direct-current converter valve 32, and the second diode valve 33 are connected in series on a direct-current side. The first diode valve 31, the offshore half-bridge flexible direct-current converter valve 32, the second diode valve 33, and the diesel generator-converter group 34 are respectively connected to the offshore alternating-current bus 35. The offshore alternating-current bus 35 is connected to the offshore wind farm 4.

Through the foregoing system, in the offshore converter station 3, the offshore half-bridge flexible direct-current converter valve 32 is connected in series to the first diode valve 31 and the second diode valve 33 on the direct-current side. The submodule costs of the offshore half-bridge flexible direct-current converter valve 32 are lower than the costs of full-bridge submodules. In addition, a low-cost diesel generator-converter group 34 is used as a grid-forming power supply in the offshore converter station 3 to provide a starting power supply to the offshore converter station 3 and the offshore wind farm 4. The system implements a self-starting function when onshore backfeed of a starting power supply fails. In addition, the diesel generator-converter group 34 does not have a risk of a phase-change failure, so that power supply reliability is ensured.

In FIG. 1, the onshore converter station 2 includes an onshore flexible direct-current converter valve 21. The onshore flexible direct-current converter valve 21 includes a three-phase bridge arm structure, and each bridge arm of the three-phase bridge arm structure includes a plurality of half-bridge submodules connected in series.

It is considered that in the related art, the onshore converter station 2 uses a flexible direct-current converter valve with a direct-current voltage adjustable within a wide range, and a large number of full-bridge submodules need to be configured, which significantly increases the costs of the onshore flexible direct-current converter valve 21. In the embodiments of the present application, the half-bridge submodules are used in the onshore converter station 2. Two expensive power semiconductor devices in the full-bridge submodules are not required in the half-bridge submodules. Therefore, the construction costs of the offshore wind power HVDC transmission system are further reduced, and in addition, compared with the use of an LLC converter valve, the power supply reliability of the onshore converter station 2 is improved.

In FIG. 1, the onshore converter station 2 further includes an onshore flexible direct-current interface transformer 22. Three phases A, B, and C of the onshore flexible direct-current converter valve 21 are connected to the onshore power grid 1 through a second circuit breaker 24, the onshore flexible direct-current interface transformer 22, and a first circuit breaker 23 in sequence.

In FIG. 1, the diesel generator-converter group 34 includes a diesel generator 341 and a converter 342, and the offshore converter station 3 further includes a voltage-transformer 36.

The diesel generator 341 is connected to the offshore alternating-current bus 35 through the converter 342, a third circuit breaker 37, the voltage-transformer 36, and a fourth circuit breaker 38 in sequence.

In FIG. 1, the offshore converter station 3 further includes a first rectifier transformer 39, an offshore flexible direct-current interface transformer 40, and a second rectifier transformer 41.

The first diode valve 31 is connected to the offshore alternating-current bus 35 through the first rectifier transformer 39 and a fifth circuit breaker 42 in sequence.

The offshore half-bridge flexible direct-current converter valve 32 is connected to the offshore alternating-current bus 35 through a sixth circuit breaker 43, the offshore flexible direct-current interface transformer 40, and a seventh circuit breaker 44 in sequence.

The second diode valve 33 is connected to the offshore alternating-current bus 35 through the second rectifier transformer 41 and an eighth circuit breaker 45 in sequence.

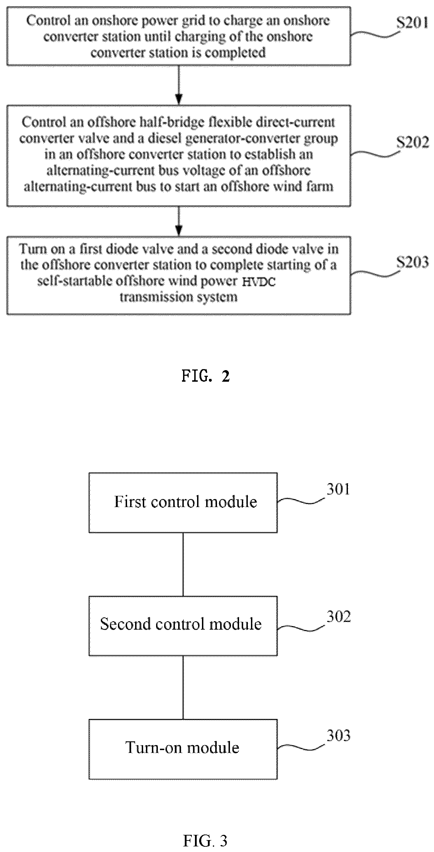

FIG. 2 is a flowchart of a starting control method of a self-startable offshore wind power HVDC transmission system according to an exemplary embodiment, used by the self-startable offshore wind power HVDC transmission system in the foregoing embodiment. As shown in FIG. 2, the method includes the following Steps S201 to S203.

Step S201: Charge the onshore converter station 2 by the onshore power grid 1 until the charging of the onshore converter station 2 is completed.

In an optional embodiment, an onshore flexible direct-current converter valve in the onshore converter station 2 is charged by the onshore power grid 1 until charging of the onshore flexible direct-current converter valve is completed.

Step S202: Control the offshore half-bridge flexible direct-current converter valve 32 and the diesel generator-converter group 34 in the offshore converter station 3 to jointly support an alternating-current bus voltage of the offshore alternating-current bus 35 to start the offshore wind farm 4.

Step S203: Turn on the first diode valve 31 and the second diode valve 33 in the offshore converter station 3 to complete the starting of the self-startable offshore wind power HVDC transmission system.

Through the starting control method provided in the embodiments of the present application, the offshore wind power HVDC transmission system can implement a self-starting function by using a low-cost diesel generator-converter group 34 as a grid-forming power supply when onshore backfeed of a starting power supply fails.

In an example, the onshore converter station 2 includes an onshore flexible direct-current converter valve 21 and an onshore flexible direct-current interface transformer 22. The onshore flexible direct-current converter valve 21 is connected to the onshore power grid 1 through a second circuit breaker 24, the onshore flexible direct-current interface transformer 22, and a first circuit breaker 23 in sequence.

Specific content of charging the onshore converter station 2 by the onshore power grid 1 in the foregoing Step S201 includes:
closing the first circuit breaker 23 and the second circuit breaker 24, charging the onshore flexible direct-current converter valve 21 by the onshore power grid 1 until the charging of the onshore flexible direct-current converter valve 21 is completed, and then unlocking the onshore flexible direct-current converter valve 21.

In an optional embodiment, after the charging of the onshore flexible direct-current converter valve 21 is completed, the onshore flexible direct-current converter valve 21 is unlocked, and it is set that a direct-current voltage of the onshore flexible direct-current converter valve 21 is a rated direct-current voltage.

In an example, the step of controlling the offshore half-bridge flexible direct-current converter valve 32 and the diesel generator-converter group 34 in the offshore converter station 3 to jointly support the alternating-current bus voltage of the offshore alternating-current bus 35 in the foregoing Step S202 includes the following steps:
Step a1: Control the diesel generator-converter group 34 to establish the alternating-current bus voltage to enable the offshore half-bridge flexible direct-current converter valve 32 to complete charging, and then unlock the offshore half-bridge flexible direct-current converter valve 32.

In an optional embodiment, a voltage value of the alternating-current bus voltage established by the diesel generator-converter group 34 may be slightly lower than a rated alternating-current bus voltage, and may be, for example, set to 0.95 times of the alternating-current bus voltage, with the objective of making a direct-current voltage of the offshore converter station 3 lower than a direct-current voltage of the onshore converter station 2 before the offshore half-bridge flexible direct-current converter valve 32 is unlocked to keep the diode valves from being turned on.

In an optional embodiment, the offshore half-bridge flexible direct-current converter valve 32 may be charged in an uncontrolled manner, or may be charged in a controlled manner. This is not specifically limited herein.

Step a2: Control the offshore half-bridge flexible direct-current converter valve 32 and the diesel generator-converter group 34 to jointly support the alternating-current bus voltage to start the offshore wind farm 4.

In an example, the diesel generator-converter group 34 includes a diesel generator 341 and a converter 342. The offshore converter station 3 further includes a voltage-transformer 36, a first rectifier transformer 39, an offshore flexible direct-current interface transformer 40, and a second rectifier transformer 41. The diesel generator 341 is connected to the offshore alternating-current bus 35 through the converter 342, a third circuit breaker 37, the voltage-transformer 36, and a fourth circuit breaker 38 in sequence. The first diode valve 31 is connected to the offshore alternating-current bus 35 through the first rectifier transformer 39 and a fifth circuit breaker 42 in sequence. The offshore half-bridge flexible direct-current converter valve 32 is connected to the offshore alternating-current bus 35 through a sixth circuit breaker 43, the offshore flexible direct-current interface transformer 40, and a seventh circuit breaker 44 in sequence. The second diode valve 33 is connected to the offshore alternating-current bus 35 through the second rectifier transformer 41 and an eighth circuit breaker 45 in sequence.

In the foregoing Step a1, the diesel generator-converter group 34 is controlled to establish the alternating-current bus voltage to enable the offshore half-bridge flexible direct-current converter valve 32 to complete charging in the following manner:
closing the third circuit breaker 37, the fourth circuit breaker 38, the fifth circuit breaker 42, the sixth circuit breaker 43, the seventh circuit breaker 44, and the eighth circuit breaker 45, controlling the diesel generator-converter group 34 to establish the alternating-current bus voltage in a manner of stepping up from zero voltage by means of alternating-current voltage amplitude and frequency control (V/F control), starting to charge the offshore half-bridge flexible direct-current converter valve 32 and feeding electricity into the first rectifier transformer 39, the offshore flexible direct-current interface transformer 40, and the second rectifier transformer 41 during a process of stepping up from zero voltage, continuing to charge the offshore half-bridge flexible direct-current converter valve 32 after the diesel generator-converter group 34 establishes the alternating-current bus voltage until the charging of the offshore half-bridge flexible direct-current converter valve 32 is completed, and then unlocking the offshore half-bridge flexible direct-current converter valve 32.

Through the embodiments of the present application, the diesel generator-converter group 34 is controlled to establish the alternating-current bus voltage in the manner of stepping up from zero voltage by means of alternating-current voltage amplitude and frequency control to stably charge the offshore half-bridge flexible direct-current converter valve 32, to avoid a charging overcurrent, excite the first rectifier transformer 39, the offshore flexible direct-current interface transformer 40, and the second rectifier transformer 41, reduce a current impact when the diode valves are put into operation, and avoid the addition of an extra charging resistance.

In an example, in the foregoing Step a2, the step of controlling the offshore half-bridge flexible direct-current converter valve 32 and the diesel generator-converter group 34 to jointly support the alternating-current bus voltage to in the following manner:
controlling the offshore half-bridge flexible direct-current converter valve 32 in a manner of alternating-current voltage amplitude and frequency control to jointly support the alternating-current bus voltage (V/F control) together with the diesel generator-converter group 34 to start a preset quantity of wind turbines in the offshore wind farm 4; and
after the preset quantity of wind turbines in the offshore wind farm 4 have been started so that power is transmitted to the offshore converter station 3 therefrom, switching the diesel generator 341 to a control (P/Q control) manner with a fixed active power and a fixed reactive power.

In an optional embodiment, a quantity of started wind turbines on the offshore wind farm 4 may be set according to an actual requirement. This is not specifically limited herein.

In an example, in the foregoing Step S203, specific steps of turning on the first diode valve 31 and the second diode valve 33 in the offshore converter station 3 include:
first, controlling the offshore half-bridge flexible direct-current converter valve 32 to increase the alternating-current bus voltage to turn on the first diode valve 31 and the second diode valve 33.

In an optional embodiment, after the onshore flexible direct-current converter valve 21 has established the direct-current voltage, charging of a direct-current submarine cable is completed. The offshore half-bridge flexible direct-current converter valve 32 increases the alternating-current bus voltage, to make the direct-current voltage of the offshore converter station 3 greater than a direct-current voltage at a connection between the direct-current submarine cable and the offshore converter station 3. In this case, the first diode valve 31 and the second diode valve 33 are turned on. Power fed into the offshore converter station 3 through the wind turbine in the offshore wind farm 4 is transmitted to the onshore converter station 2 through the direct-current submarine cable.

Next, the diesel generator 341 is controlled to exit operation, and other wind turbines in the offshore wind farm 4 are started to complete the starting of the system. In this case, the offshore wind power HVDC transmission system is turned into a normal operation state.

In an optional embodiment, the diesel generator 341 is controlled to exit operation in the following manner:
reducing an active power and a reactive power of the diesel generator 341 until the active power and the reactive power of the diesel generator 341 are both 0, and then opening the third circuit breaker 37 and the fourth circuit breaker 38.

Based on the same inventive concept, embodiments of the present application further provide a starting control apparatus of a self-startable offshore wind power HVDC transmission system, used by the self-startable offshore wind power HVDC transmission system in the foregoing embodiments. As shown in FIG. 3, the apparatus includes:
a first control module 301, configured to charge the onshore converter station by the onshore power grid until the charging of the onshore converter station is completed, where for details, refer to the description of Step S201 in the foregoing embodiments, and details are not described again herein;
a second control module 302, configured to control the offshore half-bridge flexible direct-current converter valve and the diesel generator-converter group in the offshore converter station to jointly support an alternating-current bus voltage of the offshore alternating-current bus to start the offshore wind farm, where for details, refer to the description of Step S202 in the foregoing embodiments, and details are not described again herein; and
a turn-on module 303, configured to turn on the first diode valve and the second diode valve in the offshore converter station to complete the starting of the self-startable offshore wind power HVDC transmission system, where for details, refer to the description of Step S203 in the foregoing embodiments, and details are not described again herein.

In an example, the onshore converter station includes an onshore flexible direct-current converter valve and an onshore flexible direct-current interface transformer. The onshore flexible direct-current converter valve is connected to the onshore power grid through a second circuit breaker, the onshore flexible direct-current interface transformer, and a first circuit breaker in sequence. The first control module 301 includes:
a first control submodule, configured to close the first circuit breaker and the second circuit breaker, charge the onshore flexible direct-current converter valve by the onshore power grid until the charging of the onshore flexible direct-current converter valve is completed, and then unlock the onshore flexible direct-current converter valve, where for details, refer to the description in the foregoing embodiments, and details are not described again herein.

In an example, the second control module 302 includes:
a second control submodule, configured to control the diesel generator-converter group to establish the alternating-current bus voltage to enable the offshore half-bridge flexible direct-current converter valve to complete charging, and then unlock the offshore half-bridge flexible direct-current converter valve, where for details, refer to the description in the foregoing embodiments, and details are not described again herein; and
a third control submodule, configured to control the offshore half-bridge flexible direct-current converter valve and the diesel generator-converter group to jointly support the alternating-current bus voltage to start the offshore wind farm, where for details, refer to the description in the foregoing embodiments, and details are not described again herein.

In an example, the diesel generator-converter group includes a diesel generator and a converter, and the offshore converter station further includes a voltage-transformer, a first rectifier transformer, an offshore flexible direct-current interface transformer, and a second rectifier transformer. The diesel generator is connected to the offshore alternating-current bus through the converter, a third circuit breaker, the voltage-transformer, and a fourth circuit breaker in sequence; the first diode valve is connected to the offshore alternating-current bus through the first rectifier transformer and a fifth circuit breaker in sequence; the offshore half-bridge flexible direct-current converter valve is connected to the offshore alternating-current bus through a sixth circuit breaker, the offshore flexible direct-current interface transformer, and a seventh circuit breaker in sequence; and the second diode valve is connected to the offshore alternating-current bus through the second rectifier transformer and an eighth circuit breaker in sequence. The second control submodule includes:
a first control unit, configured to close the third circuit breaker, the fourth circuit breaker, the fifth circuit breaker, the sixth circuit breaker, the seventh circuit breaker, and the eighth circuit breaker, control the diesel generator-converter group to establish the alternating-current bus voltage in a manner of stepping up from zero voltage by means of alternating-current voltage amplitude and frequency control, start to charge the offshore half-bridge flexible direct-current converter valve and feed electricity into the first rectifier transformer, the offshore flexible direct-current interface transformer, and the second rectifier transformer during a process of stepping up from zero voltage, and continue to charge the offshore half-bridge flexible direct-current converter valve after the diesel generator-converter group establishes the alternating-current bus voltage until the charging of the offshore half-bridge flexible direct-current converter valve is completed, and then unlock the offshore half-bridge flexible direct-current converter valve, where for details, refer to the description in the foregoing embodiments, and details are not described again herein.

In an example, the third control submodule includes:
a second control unit, configured to control the offshore half-bridge flexible direct-current converter valve in a manner of alternating-current voltage amplitude and frequency control to jointly support the alternating-current bus voltage together with the diesel generator-converter group to start a preset quantity of wind turbines in the offshore wind farm, where for details, refer to the description in the foregoing embodiments, and details are not described again herein; and
a third control unit, configured to: after the preset quantity of wind turbines in the offshore wind farm have been started so that power is transmitted to the offshore converter station therefrom, switch the diesel generator to a control manner with a fixed active power and a fixed reactive power, where for details, refer to the description in the foregoing embodiments, and details are not described again herein.

In an example, the turn-on module 303 includes:
a fourth control submodule, configured to control the offshore half-bridge flexible direct-current converter valve to increase the alternating-current bus voltage to turn on the first diode valve and the second diode valve, where for details, refer to the description in the foregoing embodiments, and details are not described again herein; and
a fifth control submodule, configured to control the diesel generator to exit operation, and start other wind turbines in the offshore wind farm to complete the starting of the system, where for details, refer to the description in the foregoing embodiments, and details are not described again herein.

In an example, the fifth control submodule includes:
a fourth control unit, configured to reduce an active power and a reactive power of the diesel generator until the active power and the reactive power of the diesel generator are both 0, and then open the third circuit breaker and the fourth circuit breaker, where for details, refer to the description in the foregoing embodiments, and details are not described again herein.

For the specific limitations and beneficial effects of the foregoing apparatus, refer to the limitations to the starting control method of a self-startable offshore wind power HVDC transmission system above. Details are not described again herein. All or some of the foregoing modules may be implemented through software, hardware, or a combination thereof. The foregoing modules may be built in or independent from a processor in a computer device in a hardware form, or may be stored in a memory in the computer device in a software form, making it convenient for the processor to call and perform the operations corresponding to the foregoing modules.

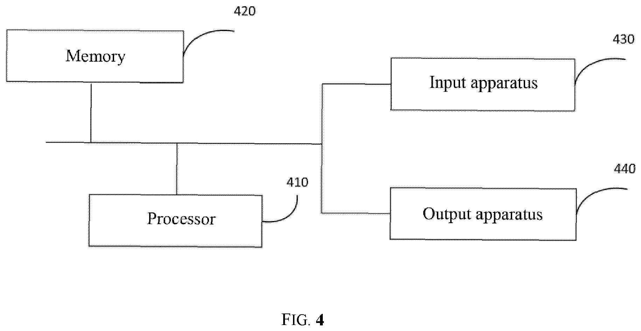

FIG. 4 is a schematic diagram of a hardware structure of a computer device according to an exemplary embodiment. As shown in FIG. 4, the device includes one or more processors 410 and a memory 420. The memory 420 includes persistent memory, volatile memory, and a hard disk. One processor 410 is used as an example in FIG. 4. The device may further include an input apparatus 430 and an output apparatus 440.

The processor 410, the memory 420, the input apparatus 430, and the output apparatus 440 may be connected through a bus or in another manner. In FIG. 4, for example, a bus connection is used.

The processor 410 may be a central processing unit (CPU). The processor 410 may be another general-purpose processor, digital signal processor (DSP), application-specific integrated circuit (ASIC), field-programmable gate array (FPGA) or another programmable logic device, discrete gate or transistor logic device, a discrete hardware component, among other chips, or a combination of the foregoing various types of chips. The general-purpose processor may be a microprocessor, or the processor may be any conventional processor or the like.

The memory 420, as a non-transitory computer-readable storage medium, includes persistent memory, volatile memory, and a hard disk, and may be configured to store non-transitory software programs, non-transitory computer-executable programs, and modules, for example, program instructions/modules corresponding to the starting control method of a self-startable offshore wind power HVDC transmission system in the embodiments of the present application. The processor 410 runs the non-transitory software programs, instructions, and modules stored in the memory 420 to perform various functional applications and data processing of the server, that is, implement any starting control method of a self-startable offshore wind power HVDC transmission system above.

The memory 420 may include a program storage area and a data storage area. The program storage area may store an operating system and an application required for at least one function. The data storage area may store data used as required. Moreover, the memory 420 may include a high-speed random access memory (RAM), and may further include a non-transitory storage, for example, at least one magnetic disk storage device, flash storage device, or other non-transitory solid state storage device. In some embodiments, the memory 420 optionally includes memories disposed remotely with respect to the processor 410. These remote memories may be connected to a data processing apparatus by a network. An example of the foregoing network includes, but not limited to, the internet, an intranet, a local area network, a mobile communication network, and a combination thereof.

The input apparatus 430 may receive input numeric or character information and to generate signal inputs related to user settings and functional control. The output apparatus 440 may include a display device such as a display.

One or more modules are stored in the memory 420, and perform, when being executed by the one or more processors 410, the method shown in FIG. 2.

The foregoing product may perform the method provided in the embodiments of the present application, and has corresponding functional modules and beneficial effects of the performed method. For the technical details that are not described exhaustively in this embodiment, refer to related descriptions in the embodiment shown in FIG. 2 for details.

Embodiments of the present application further provide a non-transitory computer storage medium. The computer storage medium stores computer-executable instructions. The computer-executable instructions may perform the control method of any of the method embodiments described above. The storage medium may be a magnetic disk, an optical disc, a read-only memory (ROM), a RAM, a flash memory, a hard disk drive (HDD) or a solid-state drive (SSD) or the like. The storage medium may include a combination of the memories of the foregoing types.

It should be noted that the relational terms herein such as "first" and "second" are used only to differentiate an entity or operation from another entity or operation, and do not require or imply any actual relationship or sequence between these entities or operations. Moreover, the terms "include," "comprise," and any variation thereof are intended to cover a non-exclusive inclusion. Therefore, in the context of a process, a method, an object, or a device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, the method, the object or the device which includes the element.

The foregoing are only specific implementations of the present application to enable persons skilled in the art to understand or implement the present application. It is apparent to a person skilled in the art to make various changes to these embodiments. The general concept defined in this specification may be implemented in other embodiments without departing from the spirit and scope of the present application. Therefore, the present application is not limited to these embodiments illustrated herein, but needs to conform to the broadest scope consistent with the principles and novel features disclosed in the present application.

## Claims

1. A self-startable offshore wind power HVDC (high voltage direct current) transmission system, wherein the system comprises an onshore power grid, an onshore converter station, an offshore converter station, and an offshore wind farm;
the onshore power grid is connected to the onshore converter station;
the onshore converter station is connected to the offshore converter station, and the offshore converter station comprises a first diode valve, an offshore half-bridge flexible direct-current converter valve, a second diode valve, a diesel generator-converter group, and an offshore alternating-current bus;
the first diode valve, the offshore half-bridge flexible direct-current converter valve, and the second diode valve are connected in series on a direct-current side;
the first diode valve, the offshore half-bridge flexible direct-current converter valve, the second diode valve, and the diesel generator-converter group are respectively connected to the offshore alternating-current bus; and
the offshore alternating-current bus is connected to the offshore wind farm.

2. The system according to claim 1, wherein the onshore converter station comprises an onshore flexible direct-current converter valve, and the onshore flexible direct-current converter valve comprises a three-phase bridge arm structure, and each bridge arm of the three-phase bridge arm structure comprises a plurality of half-bridge submodules connected in series.

3. The system according to claim 2, wherein the onshore converter station further comprises an onshore flexible direct-current interface transformer, and the onshore flexible direct-current converter valve is connected to the onshore power grid through a second circuit breaker, the onshore flexible direct-current interface transformer, and a first circuit breaker in sequence.

4. The system according to claim 1, wherein the diesel generator-converter group comprises a diesel generator and a converter, and the offshore converter station further comprises a voltage-transformer; and
the diesel generator is connected to the offshore alternating-current bus through the converter, a third circuit breaker, the voltage-transformer, and a fourth circuit breaker in sequence.

5. The system according to claim 4, wherein the offshore converter station further comprises a first rectifier transformer, an offshore flexible direct-current interface transformer, and a second rectifier transformer;
the first diode valve is connected to the offshore alternating-current bus through the first rectifier transformer and a fifth circuit breaker in sequence;
the offshore half-bridge flexible direct-current converter valve is connected to the offshore alternating-current bus through a sixth circuit breaker, the offshore flexible direct-current interface transformer, and a seventh circuit breaker in sequence; and
the second diode valve is connected to the offshore alternating-current bus through the second rectifier transformer and an eighth circuit breaker in sequence.

6. A starting control method of a self-startable offshore wind power HVDC transmission system, used by the self-startable offshore wind power HVDC transmission system according to claim 1, wherein the method comprises:
charging the onshore converter station by the onshore power grid until the charging of the onshore converter station is completed;
controlling the offshore half-bridge flexible direct-current converter valve and the diesel generator-converter group in the offshore converter station to jointly support an alternating-current bus voltage of the offshore alternating-current bus to start the offshore wind farm; and
turning on the first diode valve and the second diode valve in the offshore converter station to complete the starting of the self-startable offshore wind power HVDC transmission system.

7. The method according to claim 6, wherein the onshore converter station comprises an onshore flexible direct-current converter valve and an onshore flexible direct-current interface transformer, and the onshore flexible direct-current converter valve is connected to the onshore power grid through a second circuit breaker, the onshore flexible direct-current interface transformer, and a first circuit breaker in sequence; and
the step of charging the onshore converter station by the onshore power grid until the charging of the onshore converter station is completed comprises:
closing the first circuit breaker and the second circuit breaker, charging the onshore flexible direct-current converter valve by the onshore power grid until the charging of the onshore flexible direct-current converter valve is completed, and then unlocking the onshore flexible direct-current converter valve.

8. The method according to claim 6, wherein the step of controlling the offshore half-bridge flexible direct-current converter valve and the diesel generator-converter group in the offshore converter station to jointly support an alternating-current bus voltage of the offshore alternating-current bus to start the offshore wind farm comprises:
controlling the diesel generator-converter group to establish the alternating-current bus voltage to enable the offshore half-bridge flexible direct-current converter valve to complete charging, and then unlocking the offshore half-bridge flexible direct-current converter valve; and
controlling the offshore half-bridge flexible direct-current converter valve and the diesel generator-converter group to jointly support the alternating-current bus voltage to start the offshore wind farm.

9. The method according to claim 8, wherein the diesel generator-converter group comprises a diesel generator and a converter, and the offshore converter station further comprises a voltage-transformer, a first rectifier transformer, an offshore flexible direct-current interface transformer, and a second rectifier transformer; the diesel generator is connected to the offshore alternating-current bus through the converter, a third circuit breaker, the voltage-transformer, and a fourth circuit breaker in sequence; the first diode valve is connected to the offshore alternating-current bus through the first rectifier transformer and a fifth circuit breaker in sequence; the offshore half-bridge flexible direct-current converter valve is connected to the offshore alternating-current bus through a sixth circuit breaker, the offshore flexible direct-current interface transformer, and a seventh circuit breaker in sequence; and the second diode valve is connected to the offshore alternating-current bus through the second rectifier transformer and an eighth circuit breaker in sequence; and
the step of controlling the diesel generator-converter group to establish the alternating-current bus voltage to enable the offshore half-bridge flexible direct-current converter valve to complete charging, and then unlocking the offshore half-bridge flexible direct-current converter valve comprises:
closing the third circuit breaker, the fourth circuit breaker, the fifth circuit breaker, the sixth circuit breaker, the seventh circuit breaker, and the eighth circuit breaker, controlling the diesel generator-converter group to establish the alternating-current bus voltage in a manner of stepping up from zero voltage by means of alternating-current voltage amplitude and frequency control, starting to charge the offshore half-bridge flexible direct-current converter valve and feeding electricity into the first rectifier transformer, the offshore flexible direct-current interface transformer, and the second rectifier transformer during a process of stepping up from zero voltage, continuing to charge the offshore half-bridge flexible direct-current converter valve after the diesel generator-converter group establishes the alternating-current bus voltage until the charging of the offshore half-bridge flexible direct-current converter valve is completed, and then unlocking the offshore half-bridge flexible direct-current converter valve.

10. The method according to claim 9, wherein the step of controlling the offshore half-bridge flexible direct-current converter valve and the diesel generator-converter group to jointly support the alternating-current bus voltage to start the offshore wind farm comprises:
controlling the offshore half-bridge flexible direct-current converter valve in a manner of alternating-current voltage amplitude and frequency control to jointly support the alternating-current bus voltage together with the diesel generator-converter group to start a preset quantity of wind turbines in the offshore wind farm; and
after the preset quantity of wind turbines in the offshore wind farm have been started so that power is transmitted to the offshore converter station therefrom, switching the diesel generator to a control manner with a fixed active power and a fixed reactive power.

11. The method according to claim 10, wherein the step of turning on the first diode valve and the second diode valve in the offshore converter station to complete the starting of the self-startable offshore wind power HVDC transmission system comprises:
controlling the offshore half-bridge flexible direct-current converter valve to increase the alternating-current bus voltage to turn on the first diode valve and the second diode valve; and
controlling the diesel generator to exit operation, and starting other wind turbines in the offshore wind farm to complete the starting of the system.

12. The method according to claim 11, wherein the step of controlling the diesel generator to exit operation comprises:
reducing an active power and a reactive power of the diesel generator until the active power and the reactive power of the diesel generator are both 0, and then opening the third circuit breaker and the fourth circuit breaker.

13. A starting control apparatus of a self-startable offshore wind power HVDC transmission system, used by the self-startable offshore wind power HVDC transmission system according to claim 1, wherein the apparatus comprises:
a first control module, configured to charge the onshore converter station by the onshore power grid until the charging of the onshore converter station is completed;
a second control module, configured to control the offshore half-bridge flexible direct-current converter valve and the diesel generator-converter group in the offshore converter station to jointly support an alternating-current bus voltage of the offshore alternating-current bus to start the offshore wind farm; and
a turn-on module, configured to turn on the first diode valve and the second diode valve in the offshore converter station to complete the starting of the self-startable offshore wind power HVDC transmission system.

14. A computer device, comprising: a memory and a processor, wherein the memory and the processor are in communicational connection with each other, the memory has computer instructions stored therein, and the processor is configured to execute the computer instructions to perform the steps of the starting control method of a self-startable offshore wind power HVDC transmission system of any one of claims 6 to 12.

15. A computer-readable storage medium, having a computer program stored therein, wherein the computer program, when executed by a processor, causes the processor to implement the steps of the starting control method of a self-startable offshore wind power HVDC transmission system of any one of claims 6 to 12.
